# EUROPEAN PATENT SPECIFICATION

(11) **EP 2 741 620 B1**
(45) Date of publication and mention of the grant of the patent: **09.12.2015**
(21) Application number: 12769732.4
(22) Date of filing: 13.08.2012
(51) Int. Cl.: A23L 1/236

(54) **SWEETENER COMPOSITION**
SÜSSSTOFFZUSAMMENSETZUNG
COMPOSITION D'ÉDULCORANT

(30) Priority: 12.08.2011 IT TO20110766
(43) Date of publication of application: 18.06.2014
(73) Proprietor: Eridania Sadam S.p.A., 40123 Bologna (IT)
(72) Inventor: VALLINI, Veronica, 60015 Falconara Marittima (IT)
(74) Representative: Mangini, Simone
(86) International application number: PCT/IB2012/054114
(87) International publication number: WO 2013/024422

(56) References cited:
- FR-A1- 2 923 990
- DATABASE GNPD [Online] February 2001 (2001-02), Anonymous: "Liquid Sweetener", XP002666386, retrieved from www.gnpd.com Database accession no. 87183
- SWIADER K. ET AL: "Sensory properties of some synthetic high-intensity sweeteners in water solutions", J SCI FOOD AGRIC, vol. 89, 15 July 2009 (2009-07-15), pages 2030-2038, XP002666387,
- "Liquid Sweetener", , 4 July 2009 (2009-07-04), Retrieved from the Internet: URL:http://web.archive.org/web/20009070422 5713/http://www.delitefoods.co.za/products /liquid_sweetener.html [retrieved on 2013-08-22]

## Description

### TECHNICAL FIELD

The present invention relates to a sweetener composition.

### BACKGROUND ART

Sugar (sucrose) is the food most commonly used to sweeten foods and beverages, not only for its sweetening power, but also for the many functional and rheological properties that characterize it: due to its ability to recrystallize inside the composition in which it is contained, it gives structure and consistency to products; it makes confectionery products crunchy and promotes fermentation; it carries aromas and flavours, as, once heated, it is subject to aromatic modifications and transformations; it gives colour as a function of the treatment temperature; it increases the viscosity in an aqueous solution and, through the "whipping" process, it increases the volume of compounds. However, sugar also produces calories (4 kcal/g) and has a relatively high glycemic index (GI = 65).

In recent years the global consumption of sugar has decreased considerably, above all in industrialized countries, as a consequence of the rapid increase in the incidence of degenerative diseases associated with nutrition and the increasing awareness of consumers, above all in relation to weight increase and obesity. This has led to an increase in the demand for "sugar free", "light" or "diet" products and calorie-free "table sweeteners".

Although different formulations of sweeteners have been proposed, no sweetener currently available on the market has proved to be a fully satisfactory substitute for sugar, in terms of organoleptic, dietetic and rheological properties associated with a significant reduction of the caloric power and of the glycemic index.

Therefore, the need remains to identify new compositions that simultaneously have, as much as possible, the following characteristics: aroma similar to sucrose, low caloric power, low glycemic impact (to increase the possibility of use for diabetic subjects), substantial absence of potential allergens, substantial non-toxicity.

Sweeteners are food additives used to substitute sugar to give foods a sweet taste, in the production of food products with low energy values, of non-cariogenic products and of foods without added sugars.

Sweeteners are generally classified on the basis of their sweetening power (in relation to that of sucrose) as "intense" and "bulk".

"Intense" sweeteners (aspartame, saccharine, acesulfame, cyclamate, etc.) are defined as such due to the fact that they are characterized by a much higher sweetening power with respect to sucrose and by a more or less non-existent caloric power; they are in fact used at concentrations such that they do not add any significant energy contribution to the food to which they are added.

"Bulk" sweeteners are instead substances with sweetening power similar to or slightly lower than that of sucrose. They are thus defined because they must be used in concentrations that influence the consistency of the food to which they are added, also contributing at energy level.

It is important to point out that, although the sweetening power is subjectively variable, the sweetening power for each known sweetener is well-defined and widely documented values exist. In the absence of documented values it is however possible to carry out an evaluation of the sweetening power by means of panel tests with comparison to sweeteners with known sweetening power (such as sucrose).

Sweeteners are now widely used by consumers, and intense sweeteners are generally perceived as healthy, as they have no caloric content and are therefore suitable for the diet of diabetics or those suffering from diseases linked to obesity. Moreover, the risk of caries with intense sweeteners is considerably lower with respect to sugar.

In particular, the use of intense sweeteners has general valence in terms of low calorie input and low glycemic impact, which makes them particularly suitable when it becomes necessary to adopt and maintain a controlled diet. In particular, in individuals affected by diabetic disease, even if in mild or incipient form, it is essential to limit the intake of substances containing sugars to a minimum.

The utility of being able to provide food products, beverages, products for foods and/or pharmaceuticals sweetened with sugar substitutes which however have, or are capable of developing, as much as possible, the "round" flavour of sucrose, is therefore evident.

The patent application published with number EP2308321A1 by the same applicant proposes a composition in powder form comprising from around 50% to around 65% of erythritol and around 30-35% of an intense sweetener.

Due to their very high sweetening power, intense sweeteners must be used in extremely low doses and are therefore very difficult to dose in the solid (or powder) form in which they are generally marketed. Due to this very low dosage, they are formulated together with "filling" substances, generally constituted by bulk sweeteners, which, in fact, act as fillers.

One of the problems encountered in formulating sweetener preparations in powdered form is their mixing.

The filling substances (e.g. bulk sweeteners) are often added in very high concentrations, in order to guarantee an easily usable final dosage of the sweetener preparation. Intense sweeteners are instead active at very low concentrations (e.g. a few millimoles per litre). Therefore, it is very difficult to obtain completely homogeneous solid dispersions inside the sweetener preparation (with normal dry mixing systems it is almost impossible). Moreover, due to the different three-dimensional structures and the different density of the powders, the components existing in the mixture in a minimum quantity (i.e. the intense sweeteners) tend to separate from the other components, especially if subjected to agitation, not guaranteeing the homogeneity and stability of the product over time.

Furthermore, it must be noted that the use of high quantities of intense sweeteners involves relatively high costs and an increase in the risks for the health of users.

### DISCLOSURE OF INVENTION

The object of the present invention is to provide a sweetener composition, with which it is possible to overcome, at least partly, the problems of prior art and which is at the same time easy and inexpensive to produce.

A further object of the present invention is to provide a sweetener composition, the components of which act synergistically.

According to the present invention, there is provided a sweetener composition as defined in the appended independent claim and, preferably, in any one of the claims directly or indirectly dependent on the independent claim.

According to a first aspect of the present invention, there is provided a sweetener composition, which comprises water, and a mixture of sweeteners (which are, advantageously, dissolved in water).

The mixture of sweeteners comprises a first, a second and a third sweetener. The first sweetener is selected in the group consisting of cyclamate and a cyclamate salt. The second sweetener is selected in the group consisting of saccharine and a saccharine salt. The third sweetener is selected in the group consisting of acesulfame and an acesulfame salt.

Advantageously, the first sweetener is a cyclamate salt. The second sweetener is a saccharine salt. The third sweetener is an acesulfame salt. More in particular, the first sweetener is sodium cyclamate. The second sweetener is sodium saccharine. The third sweetener is potassium acesulfame.

It should be noted that using salts as sweeteners provides some advantages, some of which are: the sweeteners are more easily solubilised, the sweeteners are, for the most part, not metabolized by users of the composition but expelled in the urine.

The composition comprises at least 50 wt% (in particular, at least 60 wt%), with respect to the overall weight of the composition, of water. Advantageously, the composition comprises at least 70 wt% (in particular, at least 80 wt%), with respect to the overall weight of the composition, of water.

It should be noted that, due to the presence of water (in particular, in quantities sufficient to solubilise the mixture of sweeteners), mixing of the different components is immediate, homogeneous and does not present any particular technical difficulties.

The mixture of sweeteners comprises from 37 wt% to 65 wt%, with respect to the overall weight of the mixture, of the first sweetener; from 16 wt% to 35 wt%, with respect to the overall weight of the mixture, of the second sweetener; and from 3 wt% to 15 wt%, with respect to the overall weight of the mixture, of the third sweetener.

According to some embodiments, the mixture of sweeteners comprises at least 55 wt% (in particular, at least 57 wt%), with respect to the overall weight of the mixture, of the first sweetener. According to some embodiments, the mixture of sweeteners comprises at least 25 wt% (in particular, at least 28 wt%), with respect to the overall weight of the mixture, of the second sweetener. According to some embodiments, the mixture of sweeteners comprises at least 5 wt% (in particular, at least 7 wt%), with respect to the overall weight of the mixture, of the third sweetener.

According to particular embodiments, the mixture of sweeteners comprises up to 64 wt% (in particular, up to 63 wt%), with respect to the overall weight of the mixture, of the first sweetener. According to particular embodiments, the mixture of sweeteners comprises up to 33 wt% (in particular, up to 32 wt%), with respect to the overall weight of the mixture, of the second sweetener. According to particular embodiments, the mixture of sweeteners comprises up to 12 wt% (in particular, up to 11 wt%), with respect to the overall weight of the mixture, of the third sweetener.

According to specific embodiments, the mixture of sweeteners comprises at least 59 wt%, with respect to the overall weight of the mixture, of the first sweetener; at least 29 wt%, with respect to the overall weight of the mixture, of the second sweetener; and at least 8 wt%, with respect to the overall weight of the mixture, of the third sweetener.

More in particular, the mixture of sweeteners comprises up to 62 wt%, with respect to the overall weight of the mixture, of the first sweetener; up to 31 wt%, with respect to the overall weight of the mixture, of the second sweetener; up to 10 wt%, with respect to the overall weight of the mixture, of the third sweetener.

The mixture of sweeteners can contain further sweeteners besides those mentioned. Advantageously, the first, the second and the third sweetener define at least 60 wt% (in particular, at least 70 wt%) of all the sweeteners (in particular all the components that are not water) present in the mixture. More specifically, the first, the second and the third sweetener define at least 80 wt% (in particular, at least 90 wt%) of all the sweeteners (in particular all the components that are not water) present in the mixture.

According to specific embodiments, the mixture of sweeteners consists of the first, of the second and of the third sweetener. In other words, the composition does not include any sweeteners (in particular, component that is not water) besides the first, second and third sweetener.

The presence of further components (in particular, sweeteners) in relevant quantities can, in fact, limit the synergic effect (increase of the sweetening power) between the first, the second and the third sweetener.

In this regard, it must be noted that, preferably, the-mixture of sweeteners comprises less than 30 wt% (in particular, less than 15 wt%), with respect to the overall weight of the mixture, of erythritol. Advantageously, the mixture of sweeteners (and therefore also the composition) comprises less than 10 wt% (in particular, is devoid) of erythritol. The absence of erythritol (or its presence in low concentrations) promotes the synergic effect between the first, the second and the third sweetener.

The composition comprises from 8 wt% (in particular from 9 wt%), with respect to the overall weight of the composition, of the first sweetener; from 3 wt% (in particular, from 4 wt%), with respect to the overall weight of the composition, of the second sweetener; from 0.5 wt% (in particular from 1 wt%), with respect to the overall weight of the composition, of the third sweetener.

The composition comprises up to 13 wt% (in particular, up to 12 wt%), with respect to the overall weight of the composition, of the first sweetener. The composition comprises up to 7 wt% (in particular, up to 6 wt%), with respect to the overall weight of the mixture, of the second sweetener. The composition comprises up to 2.5 wt% (in particular, up to 2 wt%), with respect to the overall weight of the mixture, of the third sweetener.

Advantageously, the composition comprises from 1.5 (in particular, from 1.8), to 2.5 (in particular, to 2.2) times the first sweetener with respect to the second sweetener.

There are many advantages of the present composition with respect to the state of the art. In particular, the following are mentioned.

The composition is extremely simple and easy and inexpensive to produce. In this regard, it is important to point out that it is sufficient to mix the mixture of sweeteners in water to produce the aforesaid composition.

The composition has exhibited a clear "synergism of the sweeteners". More specifically, it has been observed experimentally that the sweetening power of each single sweetener is surprisingly multiplied. With the same sweetening power, the formulation proposed reduces the use of sweetener active ingredients by 40%. The percentage is decidedly significant and further increases the safety for users.

The components blend surprisingly in such a manner as to have a taste very similar to sucrose.

All the intense sweeteners of the formulation are safe. The fact that (at least) three sweeteners used are, combined with the principle of synergism which enables a reduction in their use, is further assurance for heavy users against the risks of accumulation, which are clearly greater when only one active ingredient is used.

### BEST MODE FOR CARRYING OUT THE INVENTION

Further characteristics of the present invention will be apparent from the following description of some non-limiting examples provided purely for illustrative purposes.

### Example 1

Starting from a mixture of sodium cyclamate and sodium saccharine in a ratio of 10:1 (FP1), a widely used combination as it is considered more favourable in limiting aftertastes, some different sweetener combinations were produced, also with the addition of acesulfame K, and having the following compositions.

**Table 1**

| | FP1 %SS | FP2 %SS | FP3 %SS | FT %SS |
|---|---|---|---|---|
| Sodium Cyclamate | 90.9 | 73.4 | 50.3 | 60.6 |
| Sodium saccharine | 9.1 | 7.3 | 5.0 | 30.3 |
| Acesulfame K | 0.0 | 19.3 | 44.7 | 9.1 |

| | | | | |
|---|---|---|---|---|
| (%SS indicates the weight percentage of the single solid component with respect to the overall weight of the mixture). | | | | |

These mixtures of sweeteners were tested in aqueous solutions to evaluate their solubility and organoleptic properties.

It was attempted to dissolve the various mixtures in concentrations (Dilution 1 - Table 1a) such as to produce four solutions with analogous sweetening powers (calculated on the basis of the mean values of the sweetening powers - see below - of the components of the mixture). In order to be suitable for use as table sweeteners in liquid form, these solutions should contain a quantity of mixture such as to give one dose (which can be estimated as 0.1 ml of solution) the sweetening power of at least 3 g of sugar (1/2 a teaspoon).

The sweetening powers considered were the following: for sodium cyclamate around 30-50 times the sweetening power of sucrose, for sodium saccharine around 300-500 times the sweetening power of sucrose, for potassium acesulfame around 200 times the sweetening power of sucrose and for erythritol around 70% of the sweetening power of sucrose.

To obtain these results, a solution of FP1 equivalent to around 41 wt% (with respect to the overall weight of the aqueous solution), a solution of FP2 equivalent to around 31 wt% (with respect to the overall weight of the aqueous solution), a solution of FP3 equivalent to around 23 wt% (with respect to the overall weight of the aqueous solution) and a solution of FT equivalent to around 18 wt% (with respect to the overall weight of the aqueous solution), would be necessary.

**Table 1a**

| | | | | |
|---|---|---|---|---|
| Dilution 1 | **41%** | **31%** | **23%** | **18%** |
| Dilution 2 | **20.5%** | **15.5%** | **11.5%** | **9%** |

It was observed that the mixture FT is the one which surprisingly showed the best ratio between solubility (in water) and sweetening power.

In fact, only for FT was it possible to obtain, in bland conditions (room T), a limpid aqueous solution with the desired sweetening characteristics (dilution 1).

Instead, it was not possible to obtain a limpid solution at the concentrations indicated for any of the remaining three mixtures.

All the mixtures were then further diluted in water (1:1, dilution 2 - Table 1a) in such a manner as to maintain (in the same manner as for the dilution 1) the solutions mutually sweetened equally with respect to the calculation of the theoretical sweetening power. The perceived organoleptic profiles were then compared, obtaining the results indicated in Table 2.

**Table 2**

| FP1 | FP2 | FP3 | FT |
|---|---|---|---|
| Sweet - aftertaste (bitter) | Slightly sweet - aftertaste (bitter+metallic) | Slightly sweet-aftertaste (metallic) | Sweet-Clean |

The formulation FT, in which the ratio between cyclamate and saccharine (in the case in hand around 2:1) differs considerably with respect to the common ratio 10:1, together with the combination with acesulfame K, surprisingly proved to be the best, capable of providing a suitable sweetening power in adequately concentrated solutions, reducing the perception of aftertastes (sweet and metallic).

### Example 2

Four formulations are prepared dissolving the various sweeteners in water. The four formulations have the following composition weight percentages:

| **FT-28** | |
|---|---|
| Water | 72% |
| Sodium cyclamate | 17% |
| Sodium saccharine | 8.5% |
| Potassium acesulfame | 2.5% |

| **FT-22** | |
|---|---|
| Water | 77.5% |
| Sodium cyclamate | 13.5% |
| Sodium saccharine | 7% |
| Potassium acesulfame | 2% |

| **FT-16** | |
|---|---|
| Water | 83.5% |
| Sodium cyclamate | 10% |
| Sodium saccharine | 5% |
| Potassium acesulfame | 1.5% |

| **FT-16e** | |
|---|---|
| Water | 68.5% |
| Sodium cyclamate | 10% |
| Sodium saccharine | 5% |
| Potassium acesulfame | 1.5% |
| Erythritol | 15% |

Considering the theoretical sweetening powers (in particular the maximum values of the intervals indicated) of the single components indicated in example 1, 0.1 ml of the formulation FT-28 should have the sweetening power of around 5.6 grams of sucrose; 0.1 ml of the formulation FT-22 should have the sweetening power of aground 4.6 grams of sucrose; 0.1 ml of the formulations FT-16 and Ft-16e should have the sweetening power of around 3.3 grams of sucrose. The formulations have a density of around 1 g/ml.

A control is then carried out to verify that the theoretical values indicated above correspond to the experimental (real) values.

The sweetening power of the compositions FT-28, FT-22, FT-16 and FT-16e was compared with respect to sucrose, through a study of qualitative-discriminative analysis of sensory type. The study involves a panel of 20 judges (10 female and 10 male) between 30 and 50 years in age, specifically trained in sensory analysis.

The control sample (sucrose) is prepared in an aqueous solution of 6 grams of sugar dissolved in 50 ml of water.

Aqueous solutions are prepared for each sample of liquid sweetener (FT-28, FT-22, FT-16 and FT-16e) by dissolving 0.1 ml of each sweetener in 50 ml of water.

The solutions are prepared 1 hour before tasting and stored at room temperature (20°C).

Each taster evaluates the sweetened solutions without being aware of their nature (the samples are presented in cups coded with initials). Each judge is told to use the following tasting method: rinse the mouth with natural mineral water before evaluation, taste the solutions in the order presented, from left to right, and answer the test questions provided. To reduce errors of psychological and physiological nature made by the judges during evaluation due to the order of presentation of the samples, the tasting sequence is random.

The judges' measurements are then subjected to variance analysis. Each consideration related to distinguishability between the products is considered valid if supported by a probability ≥ 95%.

Each taster is presented with the four samples sweetened with FT-28, FT-22, FT-16 and FT-16e and the control sample (sucrose). The taster is called to evaluate whether the samples sweetened with sugar substitutes are sweeter, less sweet or the same as the sample sweetened with sucrose.

Results are evaluated by calculating the number of persons who give a positive answer (the sample sweetened with sugar substitutes is the same as the sample sweetened with sugar). The result obtained is that 18/20 tasters consider the sample sweetened with FT-16 to be the same as the sample sweetened with sucrose, and therefore it is statistically proven that there is no significant difference between FT-16 and sucrose (P>99%), in contrast to the samples FT-28 and FT-22 which are instead significantly sweeter.

It is also surprisingly observed that the same formulation of FT-16 with the addition of erythritol at 15% (FT-16e) is not perceived to be the same by such a significant number of tasters P=95%.

The evaluations of the judges in relation to the different samples are indicated in Table 3.

**Table 3**

| **Solution sweetened with sugar substitutes compared with the solution sweetened with sugar** | **FT-28** | **FT-22** | **FT-16** | **FT-16e** |
|---|---|---|---|---|
| Sweeter | **18/20** | **14/20** | none | none |
| The same | 2/20 | 4/20 | **18/20** | **15/20** |
| Less sweet | none | 2/20 | 2/20 | 5/20 |

The tests carried out show that the compositions in accordance with the present invention exhibit a surprising synergic effect of the components. In particular, the compositions in accordance with the present invention exhibit a sweetening power around 40% greater than what was expected on the basis of the sum of the sweetening powers of the single components.

It must also be noted that the composition FT-16e does not appear completely stable, tending to partially recrystallize if the temperature decreases.

### Example 3

A study of qualitative-discriminative analysis of sensory type is carried out, involving a panel of 20 judges (10 female and. 10 male) between 30 and 50 years in age, selected from within the Applicant's company and specifically trained in sensory analysis.

The following products are examined:
**I**) composition FT-16 (see previous example);
**II**) composition FT-16e (see previous example);
**III**) sucrose.

A respective solution is prepared for each sample of sweetener (**I** and **II**), diluting 0.1 ml of each sweetener composition in 50 ml of water. The control sample (sucrose) is prepared in an aqueous solution of 6 grams of sugar dissolved in 50 ml of water.

The solutions are prepared 1 hour before tasting and stored at room temperature (20°C).

Each taster evaluates the sweetened solutions without being aware of their nature (the samples are presented in cups coded with 3-digit numbers). Each judge is told to use the following tasting method: rinse the mouth with natural mineral water before evaluation, taste the solutions in the order presented, from left to right, and answer the questions of each test provided. To reduce errors of psychological and physiological nature made by the judges during evaluation due to the order of presentation of the samples, the tasting sequence is randomized.

The judges' measurements are then subjected to variance analysis. Each consideration related to distinguishability between the products is considered valid if supported by a probability ≥ 95%.

A first test is carried out to evaluate whether differences exist between the samples **I** and **III**.

Each taster is presented with the two samples, corresponding to **I** and **III**. The taster is asked to evaluate whether there are qualitative differences in taste between the two products examined.

Results are evaluated by calculating the number of people who give a positive answer, to subsequently establish whether the two samples are statistically different.

The result obtained is of 1/20 positive answers, (i.e. persons who noticed differences between the samples), and therefore it is statistically proven that there is no significant difference between the two samples (P>99%).

A second test is carried out in the same manner as the description above to evaluate whether differences exist between the samples **II** and **III.**

The result is of 5/20 positive answers.

The compositions according to the present invention are therefore characterized by distinctive organoleptic characteristics (sugar-like palatability) and nutritional properties (absence of caloric power and glycemic impact, good digestive tolerance, absence of potential allergens, non-cariogenicity).

The composition **I** is very similar to sucrose and even more similar than the composition **II**.

## Claims

1. A sweetener composition comprising a mixture of sweeteners and at least 50 wt%, with respect to the overall weight of the composition, of water;
the mixture comprising from 37 wt% to 65 wt%, with respect to the overall weight of the mixture, of a first sweetener; from 16 wt% to 35 wt%, with respect to the overall weight of the mixture, of a second sweetener; from 3 wt% to 15 wt%, with respect to the overall weight of the mixture, of a third sweetener; and less than 30 wt%, with respect to the overall weight of the mixture, of erythritol;
the first sweetener being selected from the group consisting of cyclamate and a cyclamate salt; the second sweetener being selected from the group consisting of saccharine and a saccharine salt; the third sweetener being selected from the group consisting of acesulfame and an acesulfame salt;
the composition comprising from 8 wt% to 13 wt%, with respect to the overall weight of the composition, of the first sweetener; from 3 wt% to 7 wt%, with respect to the overall weight of the composition, of the second sweetener; from 0.5 wt% to 2.5 wt%, with respect to the overall weight of the composition, of the third sweetener.

2. The composition according to claim 1, wherein the mixture of sweeteners comprises from 55 wt%, with respect to the overall weight of the mixture, of the first sweetener; from 25 wt%, with respect to the overall weight of the mixture, of the second sweetener; and from 5 wt% to 12 wt%, with respect to the overall weight of the mixture, of the third sweetener.

3. The composition according to claim 1 or 2, wherein the mixture of sweeteners comprises from 57 wt% to 63 wt%, with respect to the overall weight of the mixture, of the first sweetener; from 28 wt% to 33 wt%, with respect to the overall weight of the mixture, of the second sweetener; and from 7 wt% to 11 wt%, with respect to the overall weight of the mixture, of the third sweetener.

4. The composition according to any of the preceding claims, wherein the first, the second and the third sweetener define at least 60 wt% (in particular, at least 70 wt%) of all the sweeteners.

5. The composition according to any of the preceding claims, and comprising at least 60 wt%, with respect to the overall weight of the composition, of water; from 9 wt% to 12 wt%, with respect to the overall weight of the composition, of the first sweetener; from 4 wt% to 6 wt%, with respect to the overall weight of the composition, of the second sweetener; from 1 wt% to 2 wt%, with respect to the overall weight of the composition, of the third sweetener.

6. The composition according to any of the preceding claims, wherein the first sweetener is a cyclamate salt; the second sweetener is saccharine salt; the third sweetener is an acesulfame salt.

7. The composition according to any of the preceding claims, wherein the first sweetener is a sodium cyclamate; the second sweetener is sodium saccharine; the third sweetener is potassium acesulfame.

8. The composition according to any of the preceding claims, and comprising at least 70 wt%, with respect to the overall weight of the composition, of water.

9. The composition according to any of the preceding claims, and comprising at least 80 wt%, with respect to the overall weight of the composition, of water.

10. The composition according to any of the preceding claims, and comprising less than 15 wt%, with respect to the overall weight of the composition, of erythritol.

11. The composition according to any of the preceding claims, wherein the first, the second and the third sweetener define at least 80 wt% of all the sweeteners.

12. The composition according to any of the preceding claims, wherein the first, the second and the third sweetener define at least 90 wt% of all the sweeteners.

13. The composition according to any of the preceding claims, wherein the mixture of sweeteners consists of the first, of the second and of the third sweetener.

## Patentansprüche

1. Süßungsmittelzusammensetzung, umfassend eine Mischung von Süßungsmitteln und mindestens 50 Gew% Wasser, bezogen auf das Gesamtgewicht der Zusammensetzung;
wobei die Mischung von 37 Gew% bis 65 Gew%, bezogen auf das Gesamtgewicht der Mischung, von einem ersten Süßungsmittel; von 16 Gew% bis 35 Gew%, bezogen auf das Gesamtgewicht der Mischung, von einem zweiten Süßungsmittel; von 3 Gew% bis 15 Gew%, bezogen auf das Gesamtgewicht der Mischung, von einem dritten Süßungsmittel; und weniger als 30 Gew%, bezogen auf das Gesamtgewicht der Mischung, von Erythritol umfasst;
wobei das erste Süßungsmittel ausgewählt ist aus der Gruppe gebildet aus Cyclamat und einem Cyclamat-Salz; das zweite Süßungsmittel ausgewählt ist aus der Gruppe gebildet aus Saccharin und einem Saccharin-Salz; das dritte Süßungsmittel ausgewählt ist aus der Gruppe gebildet aus Acesulfam und einem Acesulfam-Salz;
wobei die Zusammensetzung von 8 Gew% bis 13 Gew%, bezogen auf das Gesamtgewicht der Zusammensetzung, des ersten Süßungsmittels; von 3 Gew% bis 7 Gew%, bezogen auf das Gesamtgewicht der Zusammensetzung, des zweiten Süßungsmittels; von 0,5 Gew% bis 2,5 Gew%, bezogen auf das Gesamtgewicht der Zusammensetzung, des dritten Süßungsmittels umfasst.

2. Zusammensetzung nach Anspruch 1, bei welcher die Mischung von Süßungsmitteln von 55 Gew%, bezogen auf das Gesamtgewicht der Mischung, des ersten Süßungsmittels; von 25 Gew%, bezogen auf das Gesamtgewicht der Mischung, des zweiten Süßungsmittels; und von 5 Gew% bis 12 Gew%, bezogen auf das Gesamtgewicht der Mischung, des dritten Süßungsmittels umfasst.

3. Zusammensetzung nach Anspruch 1 oder 2, bei welcher die Mischung von Süßungsmitteln von 57 Gew% bis 63 Gew%, bezogen auf das Gesamtgewicht der Mischung, des ersten Süßungsmittels; von 28 Gew% bis 33 Gew%, bezogen auf das Gesamtgewicht der Mischung, des zweiten Süßungsmittels; und von 7 Gew% bis 11 Gew%, bezogen auf das Gesamtgewicht der Mischung, des dritten Süßungsmittels umfasst.

4. Zusammensetzung nach einem der vorhergehenden Ansprüche, bei welcher die ersten, zweiten und dritten Süßungsmittel zumindest 60 Gew% (insbesondere zumindest 70 Gew%) aller Süßungsmittel definieren.

5. Zusammensetzung nach einem der vorhergehenden Ansprüche, und umfassend zumindest 60 Gew%, bezogen auf das Gesamtgewicht der Zusammensetzung, an Wasser; von 9 Gew% bis 12 Gew%, bezogen auf das Gesamtgewicht der Zusammensetzung, des ersten Süßungsmittels; von 4 Gew% bis 6 Gew%, bezogen auf das Gesamtgewicht der Zusammensetzung, des zweiten Süßungsmittels; von 1 Gew% bis 2 Gew%, bezogen auf das Gesamtgewicht der Zusammensetzung, des dritten Süßungsmittels.

6. Zusammensetzung nach einem der vorhergehenden Ansprüche, wobei das erste Süßungsmittel ein Cyclamat-Salz; das zweite Süßungsmittel Saccharin-Salz; das dritte Süßungsmittel ein Acesulfam-Salz ist.

7. Zusammensetzung nach einem der vorhergehenden Ansprüche, wobei das erste Süßungsmittel ein Natriumcyclamat; das zweite Süßungsmittel Natriumsaccharin; das dritte Süßungsmittel Acesulfam-Kalium ist.

8. Zusammensetzung nach einem der vorhergehenden Ansprüche, und umfassend zumindest 70 Gew% Wasser, bezogen auf das Gesamtgewicht von der Zusammensetzung.

9. Zusammensetzung nach einem der vorhergehenden Ansprüche, und umfassend zumindest 80 Gew% Wasser, bezogen auf das Gesamtgewicht der Zusammensetzung.

10. Zusammensetzung nach einem der vorhergehenden Ansprüche, und umfassend weniger als 15 Gew% Erythritol, bezogen auf das Gesamtgewicht der Zusammensetzung.

11. Zusammensetzung nach einem der vorhergehenden Ansprüche, bei welcher die ersten, zweiten und dritten Süßungsmittel zumindest 80 Gew% aller Süßungsmittel definieren.

12. Zusammensetzung nach einem der vorhergehenden Ansprüche, bei welcher die ersten, zweiten und dritten Süßungsmittel zumindest 90 Gew% aller Süßungsmittel definieren.

13. Zusammensetzung nach einem der vorhergehenden Ansprüche, bei welcher die Mischung von Süßungsmitteln aus den ersten, zweiten und dritten Süßungsmitteln besteht/gebildet ist.

## Revendications

1. Composition sucrante comprenant un mélange d'agents sucrants et au moins 50 % en masse, par rapport à la masse totale de la composition, d'eau ;
le mélange comprenant entre 37 % en masse et 65 %, par rapport à la masse totale du mélange, d'un premier agent sucrant ; entre 16 % en masse et 35 % en masse, par rapport à la masse totale du mélange, d'un deuxième agent sucrant ; entre 3 % en masse et 15 %, par rapport à la masse totale du mélange, d'un troisième agent sucrant ; et moins de 30 %, par rapport à la masse totale du mélange, d'érythritol ;
le premier agent sucrant étant choisi dans le groupe constitué par le cyclamate et un sel de cyclamate ; le deuxième agent sucrant étant choisi dans le groupe constitué par la saccharine et un sel de saccharine ; le troisième agent sucrant étant choisi dans le groupe constitué par l'acésulfame et un sel d'acésulfame ;
la composition comprenant entre 8 % en masse et 13 % en masse, par rapport à la masse totale de la composition, du premier agent sucrant ; entre 3 % en masse et 7 % en masse, par rapport à la masse totale de la composition, du deuxième agent sucrant ; entre 0,5 % en masse et 2,5 % en masse, par rapport à la masse totale de la composition, du troisième agent sucrant.

2. Composition selon la revendication 1, où le mélange d'agents sucrants comprend à partir de 55 % en masse, par rapport à la masse totale de la composition, du premier agent sucrant ; à partir de 25 % en masse, par rapport à la masse totale de la composition, du deuxième agent sucrant ; et entre 5 % en masse et 12 % en masse, par rapport à la masse totale de la composition, du troisième agent sucrant.

3. Composition selon la revendication 1 ou 2, où le mélange d'agents sucrants comprend entre 57 % en masse et 63 % en masse, par rapport à la masse totale de la composition, du premier agent sucrant ; entre 28 % en masse et 33 % en masse, par rapport à la masse totale de la composition, du deuxième agent sucrant ; et entre 7 % en masse et 11 % en masse, par rapport à la masse totale de la composition, du troisième agent sucrant.

4. Composition selon l'une quelconque des revendications précédentes, où le premier agent sucrant, le deuxième agent sucrant et le troisième agent sucrant constituent au moins 60 % en masse (en particulier au moins 70 % en masse) de l'ensemble des agents sucrants.

5. Composition selon l'une quelconque des revendications précédentes, et comprenant au moins 60 % en masse, par rapport à la masse totale de la composition, d'eau ; entre 9 % en masse et 12 % en masse, par rapport à la masse totale de la composition, du premier agent sucrant ; entre 4 % et 6 % en masse, par rapport à la masse totale de la composition, du deuxième agent sucrant ; entre 1 % en masse et 2 % en masse, par rapport à la masse totale de la composition, du troisième agent sucrant.

6. Composition selon l'une quelconque des revendications précédentes, où le premier agent sucrant est un sel de cyclamate ; le deuxième agent sucrant est un sel de saccharine ; le troisième agent sucrant est un sel d'acésulfame.

7. Composition selon l'une quelconque des revendications précédentes, où le premier agent sucrant est un cyclamate de sodium ; le deuxième agent sucrant est la saccharine sodium ; le troisième agent sucrant est l'acésulfame potassium.

8. Composition selon l'une quelconque des revendications précédentes, et comprenant au moins 70 % en masse, par rapport à la masse totale de la composition, d'eau.

9. Composition selon l'une quelconque des revendications précédentes, et comprenant au moins 80 % en masse, par rapport à la masse totale de la composition, d'eau.

10. Composition selon l'une quelconque des revendications précédentes, et comprenant moins de 15 % en masse, par rapport à la masse totale de la composition, d'érythritol.

11. Composition selon l'une quelconque des revendications précédentes, où le premier agent sucrant, le deuxième agent sucrant et le troisième agent sucrant constituent au moins 80 % en masse de l'ensemble des agents sucrants.

12. Composition selon l'une quelconque des revendications précédentes, où le premier agent sucrant, le deuxième agent sucrant et le troisième agent sucrant constituent au moins 90 % en masse de l'ensemble des agents sucrants.

13. Composition selon l'une quelconque des revendications précédentes, où le mélange d'agents sucrants est constitué du premier argent sucrant, du deuxième agent sucrant et du troisième agent sucrant.
